# EUROPÄISCHE PATENTSCHRIFT

(11) **EP 4 353 546 B1**
(45) Veröffentlichungstag und Bekanntmachung des Hinweises auf die Patenterteilung: **09.04.2025**
(21) Anmeldenummer: 22200875.7
(22) Anmeldetag: 11.10.2022
(51) Int. Cl.: B60R 22/02

(54) **RÜCKHALTEELEMENT ZUR STABILISIERUNG DER SITZPOSITION EINER PERSON IM FAHRZEUG**
RESTRAINING MEMBER FOR STABILIZING SEAT POSITION OF PERSON IN VEHICLE
ÉLÉMENT DE RETENUE POUR STABILISER LA POSITION ASSISE D'UNE PERSONNE DANS UN VÉHICULE

(43) Veröffentlichungstag der Anmeldung: 17.04.2024
(73) Patentinhaber: Snooze 'n' Cruise UG (haftungsbeschränkt), 69434 Hirschhorn (DE)
(72) Erfinder: Franzisko, Marc Ludwig, 67122 Altrip (DE)
(74) Vertreter: Christ, Niko

(56) Entgegenhaltungen:
- DE-A1- 102008 003 644
- DE-A1- 4 317 276
- DE-B3- 102018 109 796
- DE-U1- 9 201 946
- FR-A1- 2 674 803

## Beschreibung

Die vorliegende Erfindung betrifft Rückhalteelement mit einem Gurtband zur Stabilisierung der Sitzhaltung einer Person in einem Fahrzeug, wobei das Gurtband sich von einem Brustende zu einem Lagerende erstreckt und wenigstens ein erstes Verbindungselement zur Verbindung des Brustendes mit einem Dreipunktgurt und wenigstens ein zweites Verbindungselement zur Verbindung des Lagerendes mit einem festen Punkt im Fahrzeug aufweist.

Ein derartiges Rückhalteelement ist aus der DE 43 17 276 A1 vorbekannt. Des Weiteren wird auf die FR 2 674 803 A1, die DE 10 2008 003644 A1, die DE 10 2018 109796 B3 und die DE 92 01 946 U1 verwiesen.

In der DE 102019115430 A1 ein Rückhaltegurt für ein Fahrzeug offenbart. Dieser Rückhaltegurt ist an der Hauptkonstruktion des Fahrzeugs befestigt und beinhaltet einen Körper. Der Körper ist so geformt, dass er den Insassenkörper sichert, weil er wie ein Korsett angelegt wird. Er kann eine Alternative zum klassischen Kindersitz darstellen. Dieses Rückhalteelement ist allerdings nur für sehr kleine Kinder geeignet, da es als Korsett ausgebildet ist, welches sich an die Proportionen des Kindes anpasst. Auch kann der starre Körper das Kind in seiner Bewegungsfreiheit einengen.

Größere Kinder sitzen aber häufig in einem Kindersitz, der durch einem Dreipunkt-Gurt gesichert ist. Die Sitzhaltung bleibt zunächst aufrecht, bis das Kind einschläft. Beim Einschlafen des Kindes fällt der Kopf des Kindes häufig nach vorne, links oder rechts. Dies kann zu einem Überstrapazieren der Nackenmuskulatur oder sogar zu Verletzungen im Nacken oder Schulterbereich führen.

Der DE 102005045025 A1 ist ein Kopf-Einpunkt-Sicherheitsgurt-System zu entnehmen, welches den Kopf des Kindes beim Autofahren fixiert. Es wird mit zwei Gurten an der Kopfstütze des Kindersitzes befestigt und besteht aus seitlichen am Kopf angebrachten Polstern und einem Stirnband, dass je nach Bedarf in die Stirn geschoben werden kann und dann den Kopf fixiert. Allerdings ist das Kind in diesem Fall sehr in seiner Bewegungsfreiheit eingeschränkt. Auch sollte das Stirnband erst nach dem Einschlafen angelegt werden, da der Kopf nicht unnötig fixiert werden sollte. Hierfür ist eine zusätzliche Person auf der Rückbank erforderlich. In dieser Variante muss das Kind zusätzlich gesichert werden. In aller Regel geschieht dies über einen Dreipunktgurt.

Vor diesem Hintergrund liegt der vorliegenden Erfindung die Aufgabe zugrunde, ein Rückhalteelement zur Stabilisierung der Sitzhaltung einer Person im Auto zu schaffen, welche die Position eines Dreipunktgurts korrigiert, damit der Kopf-Nackenbereich im Auto nicht überstrapaziert wird.

Gelöst wird die Aufgabe durch ein Rückhalteelement zur Stabilisierung der Sitzhaltung einer Person im Fahrzeug gemäß den Merkmalen des unabhängigen Anspruchs 1. Sinnvolle Ausgestaltungen eines solchen Rückhalteelements können den sich anschließenden abhängigen Ansprüchen entnommen werden.

Vorgesehen ist ein Rückhalteelement mit einem Gurtband zur Stabilisierung der Sitzhaltung einer Person in einem Fahrzeug. Erfindungsgemäß ist ein solches Rückhalteelement dadurch gekennzeichnet, dass das Gurtband sich von einem Brustende zu einem Lagerende erstreckt und wenigstens ein erstes Verbindungselement zur Verbindung des Brustendes mit einem Dreipunktgurt und wenigstens ein zweites Verbindungselement zur Verbindung des Lagerendes mit einem festen Punkt im Fahrzeug aufweist.

Die Sicherung einer Person gegenüber Rückhaltefällen in einem Fahrzeug während der Fahrt erfolgt meistens über einen Dreipunktgurt. Der Dreipunktgurt sichert die Person, wenn er quer über den Oberkörper gelegt und anschließend befestigt wird. Bei Kindern findet eine Sicherung beim Fahren in einem Kindersitz statt. Über diesen kann ebenfalls ein Dreipunktgurt gelegt und seitlich neben dem Kind befestigt werden. Zur Stabilisierung des Kopf-Nackenbereich beim Sitzen oder Schlafen im Fahrzeug kann zusätzlich ein Rückhalteelement angelegt werden Das Rückhaltelement kann am Lagerende an einem festen Punkt im Auto und am Brustende am Dreipunktgurt befestigt werden. Befestigungspunkte im Auto sind vielfältig, so kann ein Ende des Gurtbands über ein Verbindungselement an den Befestigungsstäben der Kopfstütze oder am Kindersitz befestigt werden.

In konkreter Ausführung ist wenigstens eines der Verbindungselemente zweiteilig ausgebildet, wobei ein endständiger Verbinder und ein von diesem in Längsrichtung des Gurtbands beabstandet positionierter Gegenverbinder in einem verbundenen Zustand eine Schlaufe zur Aufnahme des Dreipunktgurts oder des festen Punkts im Fahrzeug bilden. Ein zweiteiliges Verbindungselement kann als ein Klettverschluss ausgebildet sein, welcher aus am Ende und in der Mitte des Gurtbands positionierten Klettflächen aufgebaut ist. Die Klettflächen können als Verbinder und Gegenverbinder ausgebildet sein und umgreifen bei Kontakt den Dreipunktgurt oder einen festen Punkt im Auto. Ein Ende des Gurtbandes lässt sich somit am Dreipunktgurt befestigen, indem es den Dreipunktgurt umschließt. Ein Klettverschluss hat den Vorteil, dass er leicht lösbar und wiederverschließbar ist. Er besteht aus zwei Klettflächen, die bei Kontakt und leichtem Druck aneinanderhaften.

Vorzugsweise können mittig auf der Grundfläche des Gurtbands wenigstens zwei weitere Verbindungselemente befestigt sein, welche als Schlaufen ausgebildet sind und wodurch eine längenverstellbare Befestigung des Gurtbandes an einem festen Punkt im Auto möglich ist. Die Schlaufen können wieder einen Befestigungsstab der Kopfstütze umgreifen. Da mehrere Schlaufen hintereinander auf dem Gurtband angeordnet sind, kann die Schlaufe zur Befestigung ausgewählt werden, die je nach Proportion des Kindes eine geeignete Länge aufweist.

In konkreter Ausführung ist wenigstens ein zweites Verbindungselement als an dem Lagerende des Gurtbands befindliche, feste Schlaufe ausgebildet.

Diese kann den Befestigungsstab der Kopfstütze umgreifen, so dass der Befestigungsstab direkt in die Schlaufe eingeführt werden kann. Oder in ein sich am Kindersitz befindliches C-Profil. Somit ist das Rückhaltelements sicher an einem festen Punkt im Auto oder am Kindersitz befestigt.

Wenigstens eines der Verbindungselemente kann als Haken, insbesondere als Karabinerhaken, als Schnalle, Reißverschluss, Knopf und Knopfloch, Knopf und Öse oder als Druckknopf ausgebildet sein. Für die Befestigung des Gurtbandes an einem festen Punkt im Auto oder am Dreipunktgurt gibt es diverse Verschluss- und Befestigungsmöglichkeiten. So könnte ein Verbindungselement als Haken oder Karabinerhaken ausgebildet sein, welcher an einer Öse im Auto zu befestigen ist. Ein Reißverschluss wäre ein denkbares Verbindungselement, da dieser sich beliebig oft öffnen und schließen lässt. Oder mindestes ein Verbindungselement kann als Knopf und Knopfloch, Knopf und Schlaufe oder als Druckknopf ausgebildet sein, da beispielsweise ein Druckknopfverschluss ein kostengünstiges Verbindungselement darstellt. Wenigstens ein Verbindungselement kann als Schnalle ausgebildet sein, vorzugsweise als Dorn- oder Steckschnalle.

In konkreter Ausführung kann das Gurtband aus Kunststoff, vorzugsweise aus Polyethylen hergestellt sein. Ein Kunststoffgurt hat den entscheidenden Vorteil, dass es formstabil und leicht ist. Außerdem enthält ein Kunststoffgurt keine harten Kanten. Deswegen wird es bereits als Material für Sicherheitsgurte eingesetzt.

Das Gurtband kann eine rechteckige Grundfläche aufweisen, welche sich zu dem Lagerende hin verjüngt. Es ist vorteilhaft, wenn das Gurtband an der Seite, die zum Brustende führt, einen sich verjüngenden Verlauf aufweist. Damit kann vermieden werden, dass das Gurtband im Halsbereich einschneidend wirkt.

Vorzugsweise kann ein System ein Rückhalteelement und ein Befestigungsmittel zur Bereitstellung eines festen Punkts im Fahrzeug umfassen. In konkreter Ausführung kann das Befestigungsmittel als Flächenelement mit zwei Aufnahmen zum Durchführen von in einen Fahrzeugsitz einführbaren Befestigungsstäben einer Kopfstütze des Fahrzeugs und wenigstens einer Halterung zur Verbindung mit dem zweiten Verbindungselement des Gurtbands ausgebildet sein. Zur besseren Befestigung des Gurtbands im Auto kann die Kopfstütze verwendet werden. So ist ein Befestigungsmittel vorgesehen, welches durch beide Befestigungsstäbe der Kopfstütze geführt werden kann und welches zusätzlich eine Halterung aufweist, über die das Verbindungselement des Rückhalteelements befestigt werden kann.

In konkreter Ausführung kann wenigstens eine Halterung des Befestigungsmittels als in das Flächenelement eingearbeitete Nut oder als in einer Durchgangsöffnung eingehängter Haken, vorzugsweise Karabinerhaken, ausgebildet sein. Somit kann in einfacher Weise das zweite Verbindungselement an der Kopfstütze befestigt werden.

Vorzugsweise kann eine erste Aufnahme kreisrund und eine zweite Aufnahme als Langloch ausgebildet sein. Zur Befestigung des Flächenelements an der Kopfstütze des Autositzes können die Befestigungsstäben direkt durch die beiden Aufnahmen geschoben werden. Eine zweite Aufnahme kann eine ovale Form haben. Dies hat den Vorteil, dass Kopfstützen mit Befestigungsstäben, die unterschiedlich weit voneinander entfernt angeordnet sind zur Befestigung verwendet werden können.

In konkreter Ausführung kann das Flächenelement formstabil, vorzugsweise aus einem Kunststoff hergestellt sein. Vorteilhaft ist die Ausführung des Flächenelements als formstabiles Flachmittel. In diesem Fall kann die Halterung des Flächenelements stabil mit dem Rückhalteelement zur Stabilisierung der Sitzposition einer Person im Fahrzeug verbunden werden.

Das Flächenelement kann aus Polyethylen hergestellt sein. Dieses Material ist besonders geeignet, da sich aus Polyethylen leicht formstabile und kostengünstige Werkstücke herstellen lassen. Denkbar geeignet als Material für das Flächenelement wären auch andere Kunststoffe, insbesondere ein anderes Polyolefin.

Die vorstehend beschriebene Erfindung wird im Folgenden anhand eines Ausführungsbeispiels näher erläutert.

Es zeigen
- Figur 1: eine erfindungsgemäßes Rückhalteelement, zur Korrektur des Dreipunktgurtes im Auto.
- Figur 2: das Rückhalteelement gemäß Figur 1 in Draufsicht mit geöffnetem Klettverschluss
- Figur 3: das Rückhalteelement gemäß Figur 1 in Draufsicht mit geschlossenem Klettverschluss
- Figur 4: ein Befestigungsmittel zur Befestigung des Rückhalteelements an einem Autositz in Draufsicht.

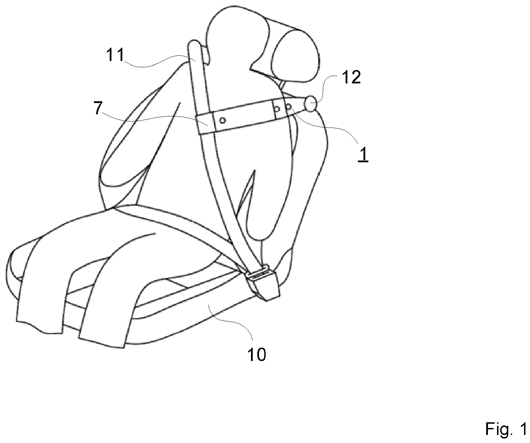

Figur 1 zeigt ein erfindungsgemäßes Rückhalteelement 1 zur Korrektur der Position des Dreipunktgurtes 11 im Auto. Das Auto weist einen Fahrzeugsitz 10 auf. Eine Person hat ihre Position über einen handelsüblichen Dreipunktgurt 11 gesichert. Wenn jetzt die Person beim Autofahren einschläft, könnte ihr Kopf entweder nach links, rechts oder nach vorne kippen. Um dies zu vermeiden, wurde ein Gurtband 2 am Dreipunktgurt 11 über eine Schlaufe 7 und an einem festen Punkt 12 im Auto befestigt.

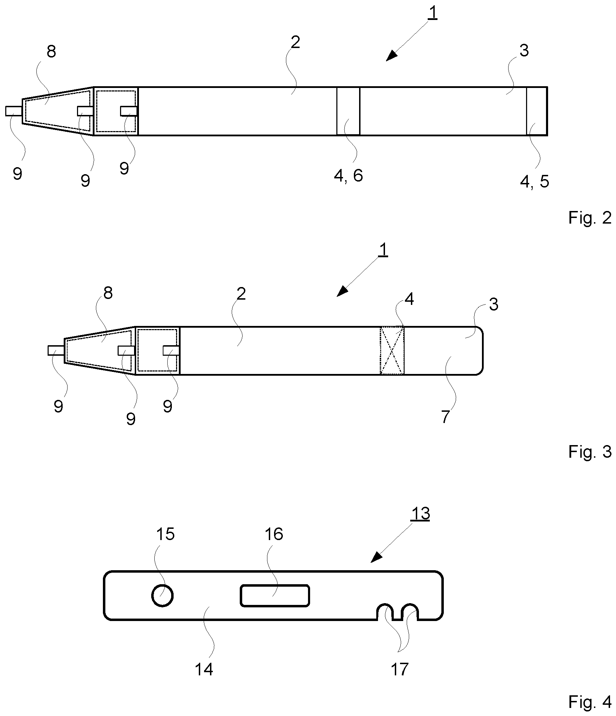

Der Aufbau des Rückhalteelements 1 in der Perspektive von oben ist in Figur 2 gezeigt. Das Rückhalteelement 1 ist als ein Gurtband 2 ausgebildet mit einem rechteckigen Grundkörper, der am Lagerende 8 einen sich verjüngenden Verlauf aufweist. Dieser Verlauf hat den Vorteil, dass es beim Anlegen nicht zu Einschnürungen im Hals-Nackenbereich kommt. Das erste Verbindungelement 4 befindet sich am Brustende 3, wohingegen das zweite Verbindungselement 9 am Lagerende 8 positioniert ist. Das zweite Verbindungelement 9 dient dazu das Gurtband 2 an einem festen Punkt 12 im Auto und am Dreipunktgurt 11 zu befestigen. Das erste Verbindungselement 4 ist zweiteilig als Verbinder 5 und Gegenverbinder 6 aufgebaut. Als Verbindungselemente 4,9 sind unterschiedliche Variationen denkbar, so können Schlaufen, Klett- und Reißverschlüsse, Druckknöpfe oder Haken zum Einsatz kommen. Als fester Punkt 12 im Fahrzeug können die Befestigungsstäbe der Kopfstütze oder andere Befestigungspunkte im Auto oder am Fahrzeugsitz 10 dienen. Es gibt zusätzliche Befestigungselemente 4,9 die es ermöglichen die Länge des Gurtbands 2 einzustellen.

In Figur 3 ist die gleiche Perspektive wie in Figur 2 gewählt. Man sieht das Rückhalteelement 1 von oben. In diesem Ausführungsbeispiel liegt ein zweiteiliges erstes Verbindungselement 4,9 vor. Verbinder 5 und Gegenverbinder 6 liegen haftend am Brustende 3 übereinander. Das Gurtband 2 bildet eine Schlaufe 7, diese kann um den Dreipunktgurt 11 geführt und somit an ihm befestigt werden.

Figur 4 zeigt das Befestigungsmittel 13, dass zur Befestigung des Rückhalteelements 1 an der Kopfstütze des Fahrzeugsitzes 10 dient. Dieses ist als ein formstabiles Flachmittel aufgebaut, in dem sich eine erste und einer zweite Aufnahme 15,16 befinden. Die formstabile Bauweise ermöglicht eine stabile Befestigung des Rückhalteelements 1 am Befestigungsmittel 13. Durch die Aufnahmen 15,16 können die Befestigungsstäbe der Kopfstütze geführt werden. Eine erste Aufnahmen 15 ist als Kreis ausgebildet, eine zweite Aufnahmen 16 weist ein längliches Loch auf. Bei Kopfstützen ist der Abstand der Befestigungsstäbe nicht immer gleich. Die ovale Form der zweiten Aufnahme 16 ermöglicht es, dass das Befestigungsmittel 13 in unterschiedlichen Fahrzeugen zum Einsatz kommt. Somit ist im Folgenden das Befestigungsmittel 13 mit einem festen Punkt 12 im Auto verbunden. Außerdem befindet sich an dem Flächenelement 14 eine Halterung 17 zur Befestigung des Rückhalteelements 1 am Befestigungsmittel 13.

Vorstehend beschrieben ist ein Rückhalteelement zur Stabilisierung der Sitzhaltung einer Person im Fahrzeug, welche die Position eines Dreipunktgurts korrigiert, damit der Kopf-Nackenbereich im Auto nicht überstrapaziert wird.

### BEZUGSZEICHENLISTE

- 1: Rückhalteelement
- 2: Gurtband
- 3: Brustende
- 4: erstes Verbindungselement
- 5: Verbinder
- 6: Gegenverbinder
- 7: Schlaufe
- 8: Lagerende
- 9: zweites Verbindungselement
- 10: Fahrzeugsitz
- 11: Dreipunktgurt
- 12: fester Punkt
- 13: Befestigungsmittel
- 14: Flächenelement
- 15: erste Aufnahme
- 16: zweite Aufnahme
- 17: Halterung

## Patentansprüche

1. Rückhalteelement mit einem Gurtband (2) zur Stabilisierung der Sitzhaltung einer Person in einem Fahrzeug, wobei das Gurtband (2) sich von einem Brustende (3) zu einem Lagerende (8) erstreckt und wenigstens ein erstes Verbindungselement (4) zur Verbindung des Brustendes (3) mit einem Dreipunktgurt (11) und wenigstens ein zweites Verbindungselement (9) zur Verbindung des Lagerendes (8) mit einem festen Punkt (12) im Fahrzeug aufweist,
**dadurch gekennzeichnet, dass** das erste Verbindungselement (4) zweiteilig ausgebildet ist, wobei ein endständiger Verbinder (5) und ein von diesem in Längsrichtung des Gurtbands (2) beabstandet positionierter Gegenverbinder (6) in einem verbundenen Zustand eine Schlaufe (7) zur Aufnahme des Dreipunktgurts (11) oder des festen Punkts (12) im Fahrzeug bilden und dass das wenigstens eine zweite Verbindungselement (9) als an dem Lagerende (8) des Gurtbands (2) befindliche, feste Schlaufe (7) ausgebildet ist.

2. Rückhalteelement gemäß Anspruch 1, **dadurch gekennzeichnet, dass** dem Gurtband (2) wenigstens ein zusätzliches zweites Verbindungselement (9) zugeordnet ist, wobei mehrere zweite Verbindungselemente (9) in Längsrichtung des Gurtbands (2) voneinander beabstandet sind.

3. Rückhalteelement gemäß Anspruch 1, **dadurch gekennzeichnet, dass** wenigstens eines der Verbindungselemente (4, 9) als Haken, insbesondere als Karabinerhaken, als Schnalle, Reißverschluss, Knopf und Knopfloch, Knopf und Öse oder als Druckknopf ausgebildet ist.

4. Rückhalteelement gemäß einem der vorhergehenden Ansprüche, **dadurch gekennzeichnet, dass** das Gurtband (2) aus Kunststoff, vorzugsweise aus Polyethylen hergestellt ist.

5. Rückhalteelement, gemäß einem der vorhergehenden Ansprüche, **dadurch gekennzeichnet, dass** das Gurtband (2) eine rechteckige Grundfläche aufweist, welche sich zu dem Lagerende (8) hin verjüngt.

## Claims

1. Restraint element with a belt strap (2) for stabilizing the sitting position of a person in a vehicle, the belt strap (2) extending from a chest end (3) to a bearing end (8) and having at least one first connecting element (4) for connecting the chest end (3) to a three-point belt (11) and at least one second connecting element (9) for connecting the bearing end (8) to a fixed point (12) in the vehicle,
**characterized in that** the first connecting element (4) is designed in two parts, an end connector (5) and a counter-connector (6) positioned at a distance from this end connector in the longitudinal direction of the belt strap (2) forming a loop (7) in a connected state for receiving the three-point belt (11) or the fixed point (12) in the vehicle and **in that** the at least one second connecting element (9) is designed as a fixed loop (7) located at the bearing end (8) of the belt strap (2).

2. Restraint element according to claim 1, **characterized in that** at least one additional second connecting element (9) is assigned to the belt strap (2), a plurality of second connecting elements (9) being spaced apart from one another in the longitudinal direction of the belt strap (2).

3. Restraint element according to claim 1, **characterized in that** at least one of the connecting elements (4, 9) is designed as a hook, in particular as a snap hook, as a buckle, zipper, button and buttonhole, button and eyelet or as a snap fastener.

4. Restraint element according to any of the preceding claims,
**characterized in that** the belt strap (2) is made of plastics material, preferably polyethylene.

5. Restraint element according to any of the preceding claims, **characterized in that** the belt strap (2) has a rectangular base which tapers toward the bearing end (8).

## Revendications

1. Élément de retenue comportant une sangle (2) pour stabiliser la position assise d'une personne dans un véhicule, dans lequel la sangle (2) s'étend d'une extrémité de poitrine (3) à une extrémité de support (8) et présente au moins un premier élément de liaison (4) permettant de relier l'extrémité de poitrine (3) à une ceinture à trois points (11) et au moins un second élément de liaison (9) permettant de relier l'extrémité de support (8) à un point fixe (12) dans le véhicule,
**caractérisé en ce que** le premier élément de liaison (4) est réalisé en deux parties, dans lequel un moyen de liaison d'extrémité (5) et un moyen de liaison complémentaire (6) positionné à distance de celui-ci dans la direction longitudinale de la sangle (2) forment, dans un état relié, une boucle (7) pour recevoir la ceinture à trois points (11) ou le point fixe (12) dans le véhicule, **et en ce que** l'au moins un second élément de liaison (9) est réalisé sous la forme d'une boucle (7) fixe se trouvant à l'extrémité de support (8) de la sangle (2).

2. Élément de retenue selon la revendication 1, **caractérisé en ce qu'au** moins un second élément de liaison (9) supplémentaire est associé à la sangle (2), dans lequel plusieurs seconds éléments de liaison (9) sont espacés les uns des autres dans la direction longitudinale de la sangle (2).

3. Élément de retenue selon la revendication 1, **caractérisé en ce qu'au** moins l'un des éléments de liaison (4, 9) est réalisé comme un crochet, en particulier comme un mousqueton, comme une boucle, une fermeture à glissière, un bouton et une boutonnière, un bouton et un œillet ou comme un bouton-pression.

4. Élément de retenue selon l'une des revendications précédentes, **caractérisé en ce que** la sangle (2) est fabriquée en matière plastique, de préférence en polyéthylène.

5. Élément de retenue, selon l'une des revendications précédentes, **caractérisé en ce que** la sangle (2) présente une surface de base rectangulaire qui se rétrécit vers l'extrémité de support (8).
